# EUROPÄISCHE PATENTSCHRIFT

(11) **EP 3 348 804 B1**
(45) Veröffentlichungstag und Bekanntmachung des Hinweises auf die Patenterteilung: **05.01.2022**
(21) Anmeldenummer: 18150622.1
(22) Anmeldetag: 08.01.2018
(51) Int. Cl.: F01M 1/10, B01D 36/00, B01D 29/11, F01M 11/08, F16N 39/00

(54) **SCHMIERMITTELBEHÄLTER FÜR EIN HYDRAULIKSYSTEM**
LUBRICANT CONTAINER FOR A HYDRAULIC SYSTEM
RÉSERVOIR DE LUBRIFIANT POUR UN SYSTÈME HYDRAULIQUE

(30) Priorität: 13.01.2017 DE 102017000279
(43) Veröffentlichungstag der Anmeldung: 18.07.2018
(73) Patentinhaber: MAN Truck & Bus SE, 80995 München (DE)
(72) Erfinder: Ehrlich, Markus, 81247 München (DE); Gell, Christian, 85293 Reichertshausen (DE); Neff, Andreas, 81247 München (DE)
(74) Vertreter: v. Bezold & Partner Patentanwälte - PartG mbB

(56) Entgegenhaltungen:
- EP-A2- 0 342 308
- DE-A1- 3 606 296
- DE-A1- 10 242 050
- DE-A1- 19 539 759
- DE-B4-102007 054 901
- US-A- 3 161 490

## Beschreibung

Die Erfindung betrifft einen Schmiermittelbehälter für ein Hydrauliksystem, aufweisend ein Behältergehäuse und einen in das Behältergehäuse integrierten Schmiermittelfilter.

Schmiermittelbehälter, nachfolgend auch als Ölbehälter bezeichnet, werden beispielsweise in der Kraftfahrzeugtechnik zur Bevorratung des über den Schmiermittelbehälter in einem Kreislauf geführten Schmiermittels, insbesondere von Öl, eingesetzt. Da jedoch das Ausfiltern von Abrieb oder eventuellen Verunreinigungen aus dem Öl zum Schutz der Komponenten eines Hydrauliksystem unerlässlich ist, muss ein entsprechender Ölfilter vorgesehen sein. Nach dem Stand der Technik sind Ölbehälter mit einem integrierten, innerhalb des Ölbehälters angeordneten Ölfilter bereits bekannt.

So offenbart die DE 10 2007 054 901 B4 einen Ölbehälter für ein Hydrauliksystem, welcher aus einem Behältergehäuse mit einem Gehäuseunterteil und einem mit dem Gehäuseunterteil stoff- oder formschlüssig verbundenen Behälterdeckel und aus einem in dem Behältergehäuse angeordneten Ölfilter besteht. An dem Behältergehäuse ist ein Öleintrittsstutzen und mindestens ein Ölaustrittsstutzen zum Anschluss des Ölbehälters an mindestens einen Kreislauf eines Hydrauliksystems ausgebildet.

Um eine Beeinträchtigung des Kühlsystems durch in dem Öl in Form von Luftblasen enthaltener Luft zu vermeiden, wird in der DE 10 2007 054 901 B4 vorgeschlagen, in dem Behältergehäuse, befestigt an mindestens einer Innenwand des Behältergehäuses, mindestens ein um den Ölfilter herum angeordnetes Leitelement anzuordnen, welches eine kreisförmige Leitbahn für das Öl ausbildet, durch die das Öl, nach dem Passieren des Ölfilters und vor dem Verlassen des Ölbehälters über den oder die Ölaustrittsstutzen, zur Abscheidung in ihm enthaltener Luft in eine Rotationsbewegung gezwungen wird. Hierbei verlässt die abgeschiedene Luft den Ölbehälter über eine in der Wand des Behälterdeckels oder eine in einer Kappe eines Öleinfüllstutzens angeordnete Luftaustrittsöffnung. Von dem oder den Leitelementen wird ein den zylinderförmigen Ölfilter umgebender hohlzylindrischer Raum gebildet, dessen Innenwände die sich in Richtung des mindestens einen Ölaustrittsstutzens öffnende kreisförmige Leitbahn ausbilden. Die kreisförmige Leitbahn führt in einem schneckenförmigen Verlauf in mehr als einem vollständigen Umlauf um den Ölfilter herum.

Die DE 10 2010 035 054 A1 offenbart einen Ölbehälter, der ein im Wesentlichen kreiszylindrisches Gehäuse hat, in dem zumindest ein Leitelement aufgenommen ist, wodurch ein zumindest ansatzweise spiralförmiger Strömungskanal zur Entgasung von Öl gebildet ist. Dabei verläuft der Strömungskanal von einem etwa mittig an einem Boden des Gehäuses angeordneten Eingangsanschluss zu einem außermittig am Boden angeordneten Ausgangsanschluss. Das Gehäuse und das Leitelement sind aus Metall gefertigt. Offenbart ist weiterhin ein hydraulisches System mit einem derartigen Ölbehälter und mit einem dem Eingangsanschluss vorgeschalteten Rücklauffilter, der vorzugsweise ein Leitungsfilter ist.

Die DE 199 25 635 B4 offenbart einen Hydraulikölbehälter für Kraftfahrzeuge mit einem Ölfilter, der in ein in dem Hydraulikölbehälter vorhandenes, separates Filtergehäuse mit wenigstens einer Eintrittsöffnung und wenigstens einer Auslassöffnung für ein Hydrauliköl eingesetzt ist, wobei das Filtergehäuse im Hydraulikölbehälter derart gekapselt untergebracht ist, dass der Ölfilter auch bei Schrägstellung des Kraftfahrzeugs stets vollständig unterhalb eines Ölstands des Filtergehäuses angeordnet ist.

Die nachfolgend beschriebene Erfindung basiert auf der Erkenntnis der Erfinder, dass ein Nachteil bei den bekannten Vorrichtungen ist, dass es bei diesen Systemen zu ungewollten Kurzschlussströmen des Öls zwischen dem Öleinfüllstutzen und dem Ölauslassstutzen im Gehäusebehälter kommen kann. Unter einem Kurschlussstrom, d. h. einem Kurschlussströmungsweg, wird eine Situation verstanden, bei der das Öl vom Öleinfüllstutzen durch den Filter und von dort ggf. über das Leitelement direkt, d.h. auf kürzestem Weg, zum Ölausfüllstutzen fließt, ohne dass die erwünschte Rotationsbewegung innerhalb des Schmiermittelbehälters erzeugt wird. Durch die damit einhergehende Verkürzung der effektiven Gasabscheidungswirkstrecke innerhalb des Behälters wird weniger Luft aus dem Öl abgeschieden und damit der Wirkungsgrad des Systems in Bezug auf die Luftabscheidung verschlechtert.

Es ist somit eine Aufgabe der Erfindung, einen verbesserten Schmiermittelbehälter bereitzustellen, mit dem Nachteile herkömmlicher Schmiermittelbehälter vermieden werden können. Die Aufgabe der Erfindung ist es insbesondere, einen Schmiermittelbehälter mit einem einfachen Aufbau bereitzustellen, welcher in der Lage ist, eine verbesserte und zuverlässige Luftabscheidung innerhalb des Schmiermittelbehälters zu erzielen.

Diese Aufgaben werden durch einen Schmiermittelbehälter mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß ist ein Schmiermittelbehälter für ein Hydrauliksystem vorgesehen, umfassend ein Behältergehäuse, mit einem Gehäuseunterteil und einem mit dem Gehäuseunterteil verbundenen Gehäuseoberteil, die stoff-, form- und/oder kraftschlüssig miteinander verbunden sein können und einen im Behältergehäuse, insbesondere im Gehäuseunterteil, angeordneten Schmiermittelfilter. Der Schmiermittelbehälter umfasst ferner mindestens einen Schmiermitteleintrittsstutzen und mindestens einen Schmiermittelaustrittsstutzen zum Anschließen des Schmiermittelbehälters an mindestens einen Kreislauf eines Hydrauliksystems, die jeweils an einem Bodenbereich des Gehäuseunterteils angeordnet sind. Ferner ist im Behältergehäuse ein Leitelement angeordnet, welches eine Leitbahn für das Schmiermittel ausbildet, durch die Schmiermittel, nach dem Passieren des Schmiermittelfilters und vor dem Verlassen des Behältergehäuses, über den Schmiermittelaustrittsstutzen zur Abscheidung von in ihm enthaltenem Gas in eine Strömungsbewegung gezwungen wird.

Gemäß allgemeinen Gesichtspunkten der Erfindung erstreckt sich das Leitelement von einem Bodenbereich des Gehäuseunterteils bis zu einem oberen Endbereich des Gehäuseunterteils und weist im oberen Endbereich mindestens eine Austrittsöffnung auf. Hierbei ist das Leitelement so ausgestaltet, dass es Schmiermittel, das aus dem Schmiermittelfilter austritt, eine Strömungsbewegung entlang des Leitelements hin zu dem oberen Endbereich des Gehäuseunterteils und durch die mindestens eine Austrittsöffnung aufzwingt.

Damit wird auf vorteilhafte Weise erreicht, dass der im Behältergehäuse zur Verfügung stehende Raum effektiv für eine Separierung von Schmiermittel und Gas verwendet wird und dass Kurzschlussströme effektiv vermieden werden. Ein Kurzschlussstrom, d. h. ein Kurschlussströmungsweg, bei dem im unteren Endbereich des Schmiermittelbehälters über den Eintrittsstutzen eintretendes Schmiermittel durch den Filter strömt und anschließend entlang des unteren Bodenbereichs durch eine Ansaugwirkung des Austrittsstutzen nach Passieren des Leitelements sofort zum Austrittsstutzen gelangt, ohne den oberen Bereich des Gehäuseunterteils zur Verlängerung des Strömungsweges auszunutzen, kann erfindungsgemäß nicht vorkommen. Der Grund ist, dass die erfindungsgemäße Ausgestaltung des Leitelements einen Strömungsweg für aus dem Schmiermittelfilter austretendes Schmiermittel hin zu dem oberen Endbereich des Gehäuseunterteils und durch die mindestens eine Austrittsöffnung ausbildet bzw. vorgibt. Dadurch muss das gefilterte Schmiermittel immer mindestens einen Strömungsweg vom Oberbereich des Gehäuseunterteils bis zum Austrittsstutzen durchlaufen. Kurschlussströmungswege werden dadurch verhindert.

Das Leitelement kann hierbei um eine Seitenfläche des Schmiermittelfilters herum angeordnet sein, so dass zwischen Schmiermittelfilter und Leitelement ein erster Zwischenraum für das Schmiermittel gebildet wird und zwischen Leitelement und der äußeren Wandung des Gehäuseunterteils ein weiterer Zwischenraum gebildet wird, in den das Schmiermittel erst nach Durchströmen der mindestens einen Austrittsöffnung gelangt. Das Leitelement kann einteilig oder mehrteilig ausgeführt sein. Das Leitelement kann als Filterkapselung oder Teil der Filterkapselung ausgeführt sein. Das Leitelement kann an mindestens einer Innenwand des Schmiermittelbehälters und/oder am Schmiermittelfilter befestigt sein.

Der Schmiermittelbehälter kann ferner derart vorgesehen sein, dass zwischen Gehäuseunterteil und Gehäuseoberteil eine Schwallplatte angeordnet ist, die Gasdurchgangsöffnungen aufweist.

Der Einsatz der Schwallplatte in dem Behältergehäuse hat den Vorteil, dass das im Gehäuseoberteil ansammelnde Gas von dem im Gehäuseunterteil ansammelnden Schmiermittel getrennt wird und dass es bei äußeren Bewegungseinflüssen des Schmiermittelbehälters, beispielsweise durch Krafteinwirkungen durch Kraftfahrzeugbewegungen, nicht zu einer erneuten unerwünschten Vermischung von zuvor separiertem Gas mit Schmiermittel kommen kann. Da die Schwallplatte Gasdurchgangsöffnungen aufweist, kann durch den Separierungsprozess aus dem Schmiermittel freigesetztes Gas in Richtung der Unterseite der Schwallplatte aufsteigen und dort besser durch die in der Schwallplatte vorzufindenden Gasdurchgangsöffnungen weiter nach oben in das Gehäuseoberteil aufsteigen. Schwallplatten in planer Ausführung sind bei Schmiermittelbehältern an sich bekannt. Vorliegend wurde ebenfalls der übliche Begriff "Schwallplatte" verwendet, jedoch sollen im Rahmen der Erfindung hiervon insbesondere auch nicht plane und nicht plattenförmige Bauteile umfasst sein. Der Begriff ist im Rahmen der Offenbarung dieses Dokuments breit auszulegen, so dass allgemein Bauteile darunter fallen, die eine Schwallschutzfunktion ausbilden.

Die erfindungsgemäß Ausgestaltung des Leitelements, das sich von einem Bodenbereich des Gehäuseunterteils bis zu einem oberen Endbereich des Gehäuseunterteils erstreckt, im oberen Endbereich mindestens eine Austrittsöffnung aufweist und dabei so ausgestaltet ist, dass es Schmiermittel, das aus dem Schmiermittelfilter austritt, eine Strömungsbewegung entlang des Leitelements hin zu dem oberen Endbereich des Gehäuseunterteils und durch die mindestens eine Austrittsöffnung aufzwingt, kann durch verschiedenen konstruktive Ausführungsformen realisiert werden. Besonders vorteilhafte sind nachfolgend beschrieben:
Gemäß einer bevorzugten Ausführungsform des Schmiermittelbehälters kann die mindestens eine Austrittsöffnung durch einen Austrittskanal gebildet sein, der gekrümmt und vorzugsweise röhrenförmig ausgeführt ist, insbesondere derart, dass ein Fluidstrom beim Austreten aus dem Austrittskanal in eine Rotationsbewegung und/oder eine spiralförmige Bewegung entlang einer Innenwand des Gehäuseunterteils der Schwallplatte versetzt wird. Ferner kann der Austrittskanal derart gekrümmt und vorzugsweise röhrenförmig ausgeführt sein, dass ein Fluidstrom annähernd tangential zur Innenwand des Gehäuseunterteils aus dem Austrittskanal austritt.

Der besondere Vorzug des Austrittskanals liegt darin, dass der aus dem Austrittskanal austretende gefilterte Fluidstrom in eine nach unten gerichtete spiralförmige Rotationsbewegung entlang der äußeren Wandung des Gehäuseunterteils und um das Leitelement herum gezwungen wird. Dadurch wird ein besonders langer Strömungsweg des Schmiermittels innerhalb des Schmiermittelbehälters erzeugt, der besonders vorteilhaft für die Abscheidung von in dem Schmiermittel eventuell enthaltener Luft ist, da sich die Wirkstrecke der Gasabscheidung im Vergleich zu einer direkten Strecke vergrößert. Einerseits verursacht die spiralförmige Bewegung des Fluids entlang der Innenseite der Außenwandung des Behältergehäuses, dass durch die Zentrifugalkraft die Feststoffe nach außen an die Behälterwand getragen werden während sich das Gas durch die vergleichsweise geringe Dichte im inneren Bereich des Behälters sammelt. Durch die Koaleszenz der Gasblasen steigen diese im Behältergehäuse sehr schnell nach oben in Richtung des Behältergehäuses. An der Oberfläche der Flüssigkeit liegt ein Bereich vor, in welchem sich die Gasblasen vorübergehend ansammeln und vereinen, so dass sich eine Gasmasse bildet. Von dieser Gasmasse wird auf vorteilhafte Weise das nachkommende Gas mitgerissen, wobei sich vergleichsweise große Blasen ausbilden, welche dann aufgrund der höheren Auftriebskraft schneller an die Oberfläche steigen.

Der Austrittskanal kann teiltorusförmig ausgeführt sein und/oder kann sich in einem Winkelbereich von 30° bis 120°, vorzugsweise in einem Winkelbereich von 45° bis 100° erstrecken.

Ein besonders vorteilhafter Variante der Ausführungsform mit Austrittskanal sieht vor, dass die Schwallplatte den Austrittskanal ausbildet. Beispielsweise kann die Schwallplatte zweiteilig ausgeführt sein, aufweisend ein Oberteil und ein Unterteil, wobei das Unterteil einen unteren Kanalabschnitt und das Oberteil einen oberen Kanalabschnitt des Austrittskanal ausbildet. Das Oberteil bildet ferner ein als Schwallschutz dienendes Abdeckelement aus.

Die derartige Ausgestaltung des Austrittskanals in der Schwallplatte hat den Vorteil, dass zwei Funktionen in einer Vorrichtung vereint sind. Einerseits realisiert die Schwallplatte die Funktion beispielsweise eines herkömmlichen Schwallschutzes bzw. Schwallblechs und andererseits kann durch die Schwallplatte ein Austrittskanal realisiert sein. Dadurch lässt sich die Anzahl der Bauteile des Schmiermittelbehälters reduzieren sowie Kosten einsparen. Die zweiteilige Ausgestaltung des Austrittskanals hat den Vorteil, dass die beiden Schwallplattenteile auf einfache Art und Weise beispielsweise durch ein Spritzgussverfahren hergestellt werden können.

Ferner besteht im Rahmen der Erfindung die Möglichkeit, dass das Leitelement einen Hohlzylinder aufweist, der um eine Mantelfläche eines vorzugsweisen zylinderförmigen Schmiermittelfilters herum angeordnet ist. Der Hohlzylinder weist an seinem dem Gehäuseoberteil bzw. der Schwallplatte zugewandten Endbereich die mindestens eine Austrittsöffnung auf, die einen Fluidstrom aus dem Hohlzylinder heraus ermöglicht. Die mindestens eine Austrittsöffnung kann als einfache Durchgangsöffnung ausgeführt sein, so dass das Schmiermittel in radialer Richtung aus dem Hohlzylinder austritt. Die mindestens eine Austrittsöffnung kann jedoch als gekrümmter Austrittskanal ausgeführt sein, wie vorstehend beschrieben.

Die zylinderförmige Ausgestaltung des Schmiermittelfilters hat den Vorteil, dass das Fluid an den oberen Bereich des Gehäuseunterteils geleitet wird, wo vorhandene Gasblasen bei niedriger Strömungsgeschwindigkeit aufsteigen. Durch den großen Strömungsquerschnitt stellt sich eine langsame Fließgeschwindigkeit des Fluids ein. Radiale Verwirbelungen bei geringen Strömungsgeschwindigkeiten nach dem Aufsteigen entlang des Leitelements sorgen für eine wiederholte Aufwärtsbewegung des Fluids im inneren Bereich des Gehäuseunterteils. Dies begünstigt ein erneutes Aufsteigen von Gasblasen, insbesondere Luftblasen, und verbessert das Abscheideverhalten der Behältergeometrie.

Gemäß einer weiteren bevorzugten Ausführungsform umfasst das Leitelement einen inneren Hohlzylinder und einen äußeren Hohlzylinder, die konzentrisch zueinander ausgebildet sind und beide den Schmiermittelfilter umgeben. Hierbei bildet der innere Hohlzylinder einen ersten Zwischenraum zwischen Schmiermittelfilter und dem inneren Hohlzylinder aus und der äußere Hohlzylinder bildet einen zweiten Zwischenraum zwischen innerem und äußerem Hohlzylinder aus. Die mindestens eine Austrittsöffnung ist im oberen Endbereich des äußeren Hohlzylinders angeordnet. Ferner ist lediglich im unteren Endbereich des inneren Hohlzylinders mindestens eine Durchtrittsöffnung vorgesehen, über die der ersten Zwischenraum mit dem zweiten Zwischenraum fluidisch gekoppelt ist. Mit anderen Worten kann das Fluid nur im unteren Endbereich des inneren Hohlzylinders in den zweiten Zwischenraum übertreten, d. h. am Boden des Gehäuseunterteils, und wird von dort zu einem Strömungsweg nach oben hin zum oberen Endbereich des äußeren Hohlzylinders gezwungen, da nur dort die mindestens eine Austrittsöffnung ist.

Die konzentrische Anordnung von innerem und äußerem Hohlzylinder hat den Vorteil, dass das Fluid nach unten in Richtung des Bodens des Gehäuseunterteils geleitet wird, bevor es durch die Durchtrittsöffnungen strömt, um im Anschluss eine Aufwärtsbewegung durchzuführen. Durch die Austrittsöffnung im oberen Endbereich des äußeren Hohlzylinders kann das Fluid entweichen, während das von dem Fluid separierte Gas im zweiten Zwischenraum nach oben entweichen kann. Darüber hinaus wird durch die konstruktive Ausgestaltung die Fluidströmungsstrecke verlängert.

Weiter kann der Schmiermittelbehälter derart ausgebildet sein, dass die mindestens eine Durchtrittsöffnung eine Ablenkeinrichtung aufweist, mittels derer ein aus dem ersten in den zweiten Zwischenraum übertretender Fluidstrom in eine Rotationsbewegung versetzt wird.

Dank der Ablenkeinrichtung kann eine Drallwirkung bzw. ein tangentialer Auslass an der Unterseite des Drallraums stromabwärts der Durchtrittsöffnungen erreicht werden, so dass stromabwärts der Durchtrittsöffnungen eine aufwärtsgerichtete, spiralförmige Strömungsbahn entsteht. Der durch die Phasentrennung entstandene gashaltige Fluidstrom wird in der Zwischenkammer in den oberen Bereich des Gehäuseunterteils hin zur Schwallplatte geleitet, während das von Gas gereinigte Fluid über Öffnungen an der äußeren Wand des zweiten Hohlzylinders vorzugsweise radial entweicht.

Die Ablenkeinrichtung kann durch mehrere Ablenkrippen und/oder Drallschaufeln gebildet sein, die vorzugsweise schaufelradförmig im Bereich der mindestens einen Durchtrittsöffnung angeordnet sind.

Durch die in den Durchtrittsöffnungen positionierten Drallschaufeln wird das Fluid in eine Drallbewegung bzw. eine Rotationsbewegung versetzt. Ferner wird dadurch der hydraulische Querschnitt zwischen den Drallschaufeln eingeschnürt, so dass die Flüssigkeit beschleunigt wird. Das mit einem Drall beaufschlagte Fluid steigt im zweiten Zwischenraum spiralförmig nach oben hin zu der Schwallplatte. Der hydraulische Querschnitt ist hier erheblich größer als an den Ablenkrippen oder Drallschaufeln, so dass sich das Fluid etwas entspannt. Bei diesem Vorgang findet eine Phasentrennung statt, da sich das in der Hydraulikflüssigkeit vorhandene Gas von dem Fluid trennt und entweicht.

Beispielsweise kann mindestens eine Durchtrittsöffnung und/oder die Ablenkeinrichtung eine Höhe von kleiner 20 mm, weiter vorzugsweise kleiner 15 mm aufweisen. Bei einer Höhe von beispielsweise 15 mm findet eine besonders effiziente Drallbeaufschlagung und Beschleunigung des Fluids in eine spiralförmige Bewegung statt.

Falls die Schwallplatte nicht zur Ausbildung des Austrittskanals genutzt wird, kann diese als planes bzw. plattenförmiges Bauteil ausgeführt sein. Besonders vorteilhaft ist aber eine Ausgestaltung der Schwallplatte, bei der diese haubenförmig, vorzugsweise kegelförmig oder kegelstumpfförmig ausgestaltet ist. Die haubenförmige, vorzugsweise kegelförmige oder kegelstumpfförmige Ausgestaltung ist von Vorteil, da diese geometrische Ausgestaltung bewirkt, dass die Gasblasen gezwungen werden, an der Unterseite der Schwallplatte hin zur Behältergehäusemitte zu wandern. Große Gasblasen, die sich entlang der Schwallplatte gebildet haben, strömen schneller Richtung Mitte als die kleineren Gasblasen. Treffen große Gasblasen auf ihrem Weg zur Mitte auf kleinere Gasblasen, so vereinen sich die kleinen mit den großen Gasblasen, was zu Folge hat, dass die großen Gasblasen zusätzlich an Volumen zunehmen und mit einer noch höheren Geschwindigkeit hin in Richtung der Mitte strömen. Insbesondere die kegelstumpfförmige Ausgestaltung kann als vorteilhaft angesehen werden, da die Deckfläche der kegelförmigen Schwallplatte eine Gasdurchgangsöffnung aufweist, durch die die großen Gasblasen schnell nach oben entweichen können.

Weiter können die Gasdurchgangsöffnungen der Schwallplatte unterschiedliche Größen aufweisen, wobei die über oder angrenzend an den Schmiermittelfilter angeordneten Gasdurchgangsöffnungen am größten ausgeführt sind. Dies hat den Vorteil, dass kleine Gasblasen durch die kleinen Gasdurchgangsöffnungen entweichen können während große Gasblasenansammlungen über die größeren Gasdurchgangsöffnungen abfließen können. Da sich durch nach und nach zusammenfließende kleine Gasblasen größere Gasblasen bilden und diese sich aufgrund beispielsweise der kegelstumpfförmigen Ausgestaltung der Schwallplatte hin zu einer Position über dem Schmiermittelfilter bewegen, ist es von Vorteil, wenn an dieser Stelle die größten Gasdurchgangsöffnungen ausgeführt sind. Die größeren Gasdurchgangsöffnungen können vorteilhafterweise nahe des Schmiermittelfilters in der Schwallplatte realisiert sein.

Weiter kann der Schmiermittelbehälter derart ausgebildet sein, dass das Leitelement einen Leitelementdeckel aufweist, der einen der Schwallplatte zugewandten Endbereich des Schmiermittelfilters überdeckt und unter Ausbildung mindestens eines Gasaustrittsspalts zur Schwallplatte angeordnet ist.

Dies hat den Vorteil, dass entlang des Gasaustrittsspaltes auch größere Gasmengen vom Gehäuseunterteil zum Gehäuseoberteil entweichen können. Der Leitelementdeckel erfüllt vorliegend einerseits die Funktion eines Deckels und andererseits die Funktion eines Gasleitelements. Dies stellt eine effektive Einrichtung dar, die es ermöglicht, dass Gas vom Gehäuseunterteil in den Gehäuseoberteil entweichen kann.

Gemäß einer weiteren Variante kann dieser mindestens eine Gasaustrittsspalt durch eine zumindest teilweise radiale Überlappung des Leitelementdeckels und der Schwallplatte gebildet sein, wobei die Schwallplatte auf mindestens einer an dem Leitelementdeckel angeordneten Abstützrippe derart aufliegt, so dass im Überlappungsbereich mindestens ein Gasaustrittsspalt zum Abführen des aus dem Schmiermittel separierten Gases vorgesehen ist. Dies hat den Vorteil, dass dem Gas eine zusätzliche Möglichkeit neben den Durchtrittsöffnungen in der Schwallplatte gegeben wird, aus dem Gehäuseunterteil in den Gehäuseoberteil zu entweichen. Im radialen Überlappungsbereich werden somit Stufensprünge zwischen Leitelementdeckel und Schwallplatte ausgebildet.

Weiter kann der Schmiermittelbehälter derart ausgebildet sein, dass der Bodenbereich des Gehäuseunterteils einen Leckageanschluss zur Aufnahme von Leckschmiermittel aufweist, wobei der Bodenbereich geneigt ausgeführt ist und der Leckageanschluss an der tiefsten Stelle des Bodenbereichs des Gehäuseunterteils angeordnet ist.

Bei dieser vorteilhaften Ausgestaltung befindet sich im Bereich des Leckageanschlusses die tiefste Stelle des Gehäuseunterteils, wobei sich der Sauganschluss auf einem höheren Niveau befindet. Dies hat den Vorteil, dass am Sauganschluss keine Schmutzpartikel und kein Wasser angesaugt werden können, weil sich Schmutzpartikel und Wasser an der tiefsten Stelle absetzen. So kann beispielsweise Verstopfungen des Saugrohres entgegengewirkt werden. Darüber hinaus begünstigt ein geneigter Boden das Ablassen des Schmiermittelvolumens im Wartungsfall.

Weiter kann der Schmiermittelbehälter derart ausgebildet sein, dass der Schmiermittelfilter an einem dem Gehäuseoberteil zugewandten Endbereich über eine Feder mit einem Griff zum Einsetzen und Herausnehmen des Schmiermittelfilters, der am Gehäuseoberteil abgestützt ist, gekoppelt ist, wobei über die Feder ein Filtersicherungsventil ausgebildet wird, derart, dass bei Überschreiten eines vorbestimmten Druckschwellenwerts im Inneren des Schmiermittelfilters der Schmiermittelfilter gegen die Feder angehoben wird und eine Kontaktstelle zum Gehäuseunterteil für einen Fluidstrom freigegeben wird und so einen BypassKanal ausbildet.

Das Filtersicherungsventil oder Umgehungsventil ist von Vorteil, falls sich im Behältergehäuse zu hohe Fluiddrücke einstellen. Dies ist vor allem der Fall, falls das Schmiermittel kalt ist und dadurch der Systemdruck ansteigt. Es ist somit ein Bauelement nötig, das dem ansteigenden Systemdruck innerhalb des Schmiermittelfilters entgegenwirken kann. Sollte folglich der Fluiddruck im Inneren beispielsweise des Hydrauliksystems ansteigen, so wird der Schmiermittelfilter gegen die Feder angehoben und die Kontaktstelle zum Behälterunterteil für den Volumenstrom freigegeben. So ist auf einfache Weise ein Sicherungselement zum Schutz des Schmiermittelfilters realisiert.

Weiter kann der Schmiermittelbehälter derart ausgebildet sein, dass die Feder ungeführt ist. Der Vorteil der ungeführten Feder liegt darin, dass die Feder selbst die Aufgabe eines Kopplungselements zwischen Griff und Schmiermittelfilter übernimmt. Aufgrund der kurzen Federlänge ist ein stabiler freier Zustand möglich. Darüber hinaus können Kosten eingespart werden, da ein zusätzliches Kopplungselement, das den Griff mit dem Schmiermittelfilter verbindet, nicht benötigt wird.

Ferner ist ein Kraftfahrzeug, insbesondere ein Nutzfahrzeug, mit einem Schmiermittelbehälter, wie in diesem Dokument beschrieben, vorgesehen.

Nachfolgend werden drei Ausführungsbeispiele eines erfindungsgemäßen Schmiermittelbehälters für ein Hydrauliksystem anhand der beiliegenden Zeichnungen näher erläutert. In den zugehörigen Zeichnungen zeigen:
- Figur 1: eine perspektivische Schnittansicht einer möglichen ersten Ausführungsform des erfindungsgemäßen Schmiermittelbehälters;
- Figur 2: eine perspektivische Explosionsansicht der ersten Ausführungsform;
- Figur 3: eine Schnittansicht durch die Schwallplatte der ersten Ausführungsform in einer Draufsicht;
- Figur 4: eine perspektivische Schnittansicht einer zweiten Ausführungsform;
- Figur 5: eine perspektivische Schnittansicht einer dritten Ausführungsform; und
- Figur 6: eine perspektivische Schnittansicht der dritten Ausführungsform.

Gleiche oder funktional äquivalente Elemente sind in allen Figuren mit denselben Bezugszeichen bezeichnet und zum Teil nicht gesondert beschrieben.

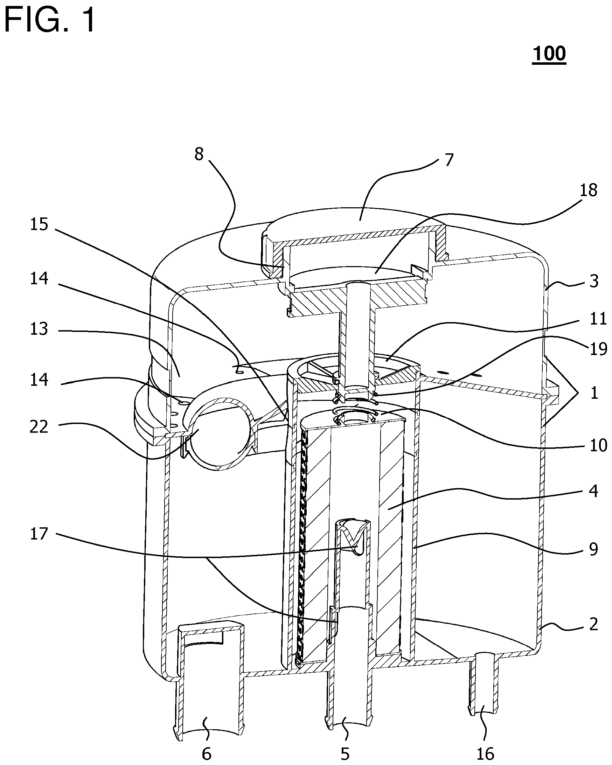

Figur 1 zeigt schematisch eine erste Ausführungsform des erfindungsgemäßen Schmiermittelbehälters 100. Der Schmiermittelbehälter 100 weist ein Behältergehäuse 1 umfassend ein Gehäuseunterteil 2 und ein Gehäuseoberteil 3 auf, wobei das Gehäuseunterteil 2 und das Gehäuseoberteil 3 stoff-, form- oder kraftschlüssig miteinander gekoppelt sind. Die Kopplung kann beispielsweise durch ein Schweißverfahren realisiert sein. Es ist jedoch selbstverständlich, dass anstatt des Schweißverfahrens auch andere unlösbare Verbindungen, beispielsweise ein Klebeverfahren, Nietverfahren, und lösbare Verbindungsarten, beispielsweise durch ein Lötverfahren oder ein Schraubverfahren, hierfür verwendet werden können. Der erfindungsgemäße Schmiermittelbehälter 100 ist vorzugsweise aus Kunststoff gefertigt, jedoch nicht auf das Material Kunststoff beschränkt. Auch andere Materialien wie beispielsweise Metall können anstatt von Kunststoff vorliegend verwendet werden. An dem Gehäuseunterteil 2 ist ein Schmiermitteleintrittsstutzen 5 zum Zuführen eines Schmiermittelgasgemisches in den Behälter vorgesehen. Der Schmiermitteleintrittsstutzen 5 ist derart konfiguriert, dass er mehrere Auslassöffnungen 17 zum Innenraum des Schmiermittelfilters 4 aufweist, was eine effektive Verteilung des zugeführten Fluids, insbesondere eines Schmiermittels wie beispielsweise Hydrauliköls, ermöglicht. Es ist jedoch selbstverständlich, dass der Schmiermitteleintrittsstutzen 5 auch andere Konfigurationen aufweisen kann. So kann der Schmiermitteleintrittsstutzen 5 nur eine Auslassöffnung 17 aufweisen.

Das Behältergehäuse 1 weist ferner einen Sauganschluss bzw. einen Schmiermittelaustrittsstutzen 6 zum Abführen von in dem Behälter von Gas separiertem Schmiermittel, insbesondere von Öl, auf. Der Bodenbereich des Gehäuseunterteils 2 weist ferner einen Leckageanschluss 16 zur Aufnahme von Leckschmiermittel auf. Der Bodenbereich des Gehäuseunterteils 2 ist geneigt und der Leckageanschluss 16 an der tiefsten Stelle des Bodenbereichs des Gehäuseunterteils 2 angeordnet. Durch diese konstruktive Auslegung des Leckageanschlusses 16 wird ermöglicht, dass sich Schmutzpartikel und Wasser an der tiefsten Stelle des Behälterunterteils 2 absetzen. Darüber hinaus begünstigt ein geneigter Boden das Ablassen des Schmiermittelvolumens samt den Schmutzpartikeln und dem Wasser im Wartungsfall.

Durch den Schmiermitteintrittsstutzen 5 wird dem Behältergehäuse 1 Schmiermittel aus einem Hydrauliksystem, insbesondere einem offenen Hydrauliksystem, zugeführt. Ein offener Hydraulikkreislauf zeichnet sich dadurch aus, dass das Öl von einer Druckquelle über den Verbraucher zu einem Behälter fließt, bevor es wiederum zur Druckquelle gelangt. Bei offenen Kreisläufen steht der verwendete Behälter unter Atmosphärendruck. Bei geschlossenen Kreisläufen hat der Behälter keine Öffnung zur Atmosphäre. Der Druck im Behälter ergibt sich dabei aus dem Rücklaufdruck. Der Schmiermittelaustrittsstutzen 6 ist vorgesehen, um von Gas separiertes Schmiermittel, insbesondere Öl, wieder dem Hydrauliksystem zuzuführen. Der Behältergehäuseboden ist vorzugsweise geneigt, so dass die tiefste Stelle im Bereich des Leckageanschlusses 16 ist und ein Ablassen des Ölvolumens im Wartungsfall begünstigt wird. Ferner weist das Behältergehäuse 1 einen Schmiermitteleinfüllstutzen 8 auf, der mit dem Behältergehäusedeckel 7 verschlossen werden kann.

Das Behältergehäuse 1 umfasst einen mittig im Behältergehäuse angeordneten zylinderförmigen Schmiermittelfilter 4. Der Schmiermittelfilter 4 weist ein Filtersystem in dem Filtermantel auf und ist in der vorliegenden Ausführungsform im oberen Bereich durch einen Filterdeckel 10 verschlossen. An seiner Unterseite weist der Schmiermittelfilter 4 eine kreisförmige Öffnung auf, die einen Innenbereich des Schmiermittelfilters 4 mit einem Außenbereich des Schmiermittelfilters 4 verbindet.

Der Schmiermittelfilter ist von einem hohlzylindrischen Abschnitt eines Leitelements 9 umgeben, wobei das Leitelement 9 an einer Unterseite am Gehäuseunterteil 2 befestigt ist. An der gegenüberliegenden Seite ist das Leitelement 9 durch einen Leitelementdeckel 11 verschlossen. Der Leitelementdeckel 11 weist eine Öffnung auf, durch die ein Griff 18 über eine Feder 19 mit dem Schmiermittelfilterdeckel 10 verbunden ist. Der Schmiermittelfilter 4 ist somit nur durch die Feder 19 mit dem Griff 18 verbunden. Aufgrund der kurzen Länge der Feder wird ein stabiler freier Zustand des Schmiermittelfilters 4 erreicht. Der Griff 18, gegen den die Federkraft wirkt, stützt sich am Gehäuseoberteil 3 ab. Für Wartungsarbeiten, beispielsweise einem Wechsel des Schmiermittelfilters 4, kann der Behältergehäusedeckel 7 abgeschraubt und der Schmiermittelfilter 4 samt der Feder 19, dem Leitelementdeckel 11 am Griff 18 aus dem Behältergehäuse 1 herausgenommen werden und in umgekehrter Reihenfolge wieder eingesetzt werden. Die federnd gelagerte Verbindung hat u. a. den Vorteil, dass ein starres Verbindungselement zwischen dem Griff 18 und dem Schmiermittelfilterdeckel 10 eingespart werden kann.

In der Regel benötigt ein Schmiermittelfilter ein Umgehungsventil, um beispielsweise einen bei kaltem Öl ansteigenden Systemdruck abbauen zu können. Sollte im Inneren des Schmiermittelfilters 4 der Schmiermitteldruck über ein bestimmtes Level ansteigen, so wird, um eine Zerstörung des Filtersystems zu vermeiden, der Schmiermittelfilter 4 gegen die Federkraft der Feder 19 angehoben und die Kontaktstelle zum Gehäuseunterteil 2 für den Schmiermittelvolumenstrom in Form eines Bypass-Kanals freigegeben. Verringert sich der Schmiermitteldruck wieder, so wird der Schmiermittelfilter 4 durch die Feder 19 formschlüssig gegen das Gehäuseunterteil 2 gedrückt, so dass ein Vorbeifließen des Schmiermittels um den Schmiermittelfilter 4 vermieden wird.

Das vorliegende Ausführungsbeispiel weist eine Schwallplatte 13 auf, die in dem Behältergehäuse 1 zwischen Gehäuseunterteil 2 und Gehäuseoberteil 3 untergebracht ist. Die Schwallplatte 13 ist an der Außenseite mit dem Gehäuseunterteil 2 und dem Gehäuseoberteil 3 verbunden. Die Schwallplatte 13 hat die Funktion, ein sich durch äußere Einflüsse in Bewegung setzendes Fluid, beispielsweise durch beim Fahren mit einem Kraftfahrzeug entstehende Kräfte, in seiner Bewegung zu beruhigen. Die Schwallplatte 13 weist eine Mehrzahl von Gasdurchgangsöffnungen 14 auf, wobei die Gasdurchgangsöffnungen 14 als Durchgangsbohrungen durch die Schwallplatte 13 vorgehen sind und unterschiedliche Größen aufweisen. Ferner ist die Schwallplatte 13 an einer äußeren Seite mit der Innenwand des Behältergehäuses 1 verbunden und an einer inneren Seite mit dem hohlzylinderförmigen Abschnitt des Leitelements 9 verbunden. An einem oberen inneren Endbereich der Schwallplatte 13, die an den zylinderförmigen Abschnitt des Leitelements 9 angrenzt, weist die Schwallplatte 13 mehreren Öffnungen in Form von Kreisringausschnitten auf.

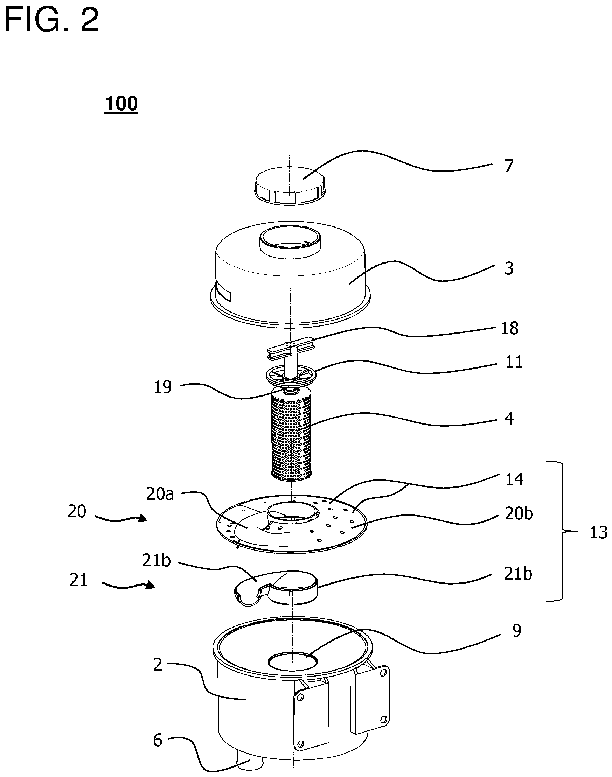

Die Figur 2 veranschaulicht eine schematische Explosionszeichnung der ersten Ausführungsform des erfindungsgemäßen Schmiermittelbehälters 100. Die Schwallplatte 13 besteht aus einem Oberteil 20 und einem Unterteil 21, wobei diese derart miteinander verbunden sind, dass sie zusammen einen Austrittskanal 22 (nachfolgend auch kurz als Kanal bezeichnet) bilden. Das Oberteil 20 und das Unterteil 21 bilden somit einen Austrittskanal 22 als Teil des Leitelements 9 aus, in den das Schmiermittel nach dem Durchfließen des hohlzylinderförmigen Abschnitts des Leitelements 9 eintritt.

Das Oberteil 20 setzt sich aus einem als Schwallschutz dienenden Abdeckelement 20b sowie einem nach unten hin offenen gekrümmten Halbkanalabschnitt 20a zusammen, der zusammen mit einem korrespondierenden Halbkanalabschnitt 21a des Unterteils 21 den Austrittskanal 22 ergibt. Das Unterteil 21 setzt sich aus einem ringförmigen Innenabschnitt 21b, der auf den hohlzylinderförmigen Abschnitt des Leitelements 9 gesteckt wird, und dem Halbkanalabschnitt 21a zusammen, so wie es in der Figur 2 veranschaulicht ist. Bei einem Zusammenbau des Schmiermittelbehälters wird auf das Gehäuseunterteil 2 das Unterteil 21 und dann das Oberteil 20 aufgesetzt.

Nachdem das Öl durch den Schmiermitteleintrittsstutzen 5 in den Innenbereich des Schmiermittelfilters 4 gelangt ist, fließt das Öl durch den Schmiermittelfilter 4, wo es beispielsweise von Schmutz gesäubert wird. Sodann wird das aus dem Schmiermittelfilter 4 austretende Öl zu einer Aufwärtsbewegung entlang der Innenwand des hohlzylinderförmigen Abschnitts des Leitelements 9 gezwungen, hin zu dem oberen Endbereich des Gehäuseunterteils, wobei das Öl dann in den Austrittskanal 22 einmündet. Das aus dem Austrittskanal 22 austretende Schmiermittel gelangt dann in den Bereich zwischen Leitelement 9 und der äußeren Wandung des Gehäuseunterteils 2.

Der Gasabscheidemechanismus funktioniert vorliegend durch eine drallartige Bewegung des Öls, wobei der Drall durch den gekrümmten Austrittskanal 22 erzeugt wird. Die Krümmung des Austrittskanals 22 ist so gewählt, dass der aus dem Austrittskanal 22 austretende Fluidstrom annähernd tangential zur Innenwand der äußeren Wandung des Gehäuseunterteils 2 aus dem Austrittskanal 22 austritt. Dadurch wird ein Fluidstrom, hier das Schmiermittel mit evtl. enthaltener Luft, beim Austreten aus dem Austrittskanal 22 in eine Rotationsbewegung und/oder eine spiralförmige Bewegung entlang einer Innenwand der äußeren Wandung des Gehäuseunterteils 2 und der Schwallplatte 13 versetzt. Dadurch werden die Feststoffe im Öl nach außen an die Innenwand des Behältergehäuses 1 getragen, während sich andererseits das Gas durch die vergleichsweise geringe Dichte im Inneren Bereich des Gehäuseunterteils 2 sammelt. Durch die Koaleszenz der Gasblasen steigen diese im Inneren des Behältergehäuses 1 an die Oberfläche der Flüssigkeit. An der Oberfläche der Flüssigkeit liegt ein Bereich vor, in welchem sich die Gasblasen vorübergehend ansammeln und vereinen, so dass sich eine Gasmasse bildet. Von dieser sich einstellenden Gasmasse wird das Gas erneut mitgerissen, wobei sich vergleichsweise große Gasblasen ausbilden, die dann aufgrund der höheren Auftriebskraft im Vergleich zu kleineren Gasblasen schnell an einen oberen Bereich des Gehäuseunterteils, insbesondere an die Oberfläche des Öls, steigen. Die großen Gasblasen laufen entlang der Unterseite der zur Mitte hin ansteigenden Schwallplatte 13 und entweichen vorzugsweise in einem Bereich oberhalb des Schmiermittelfilters 4 durch die angebrachten Gasdurchgangsöffnungen 14, 15 in der Schwallplatte 13.

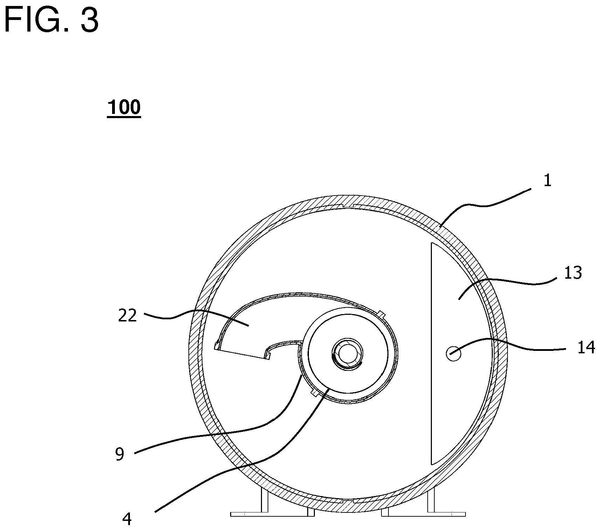

Die Figur 3 veranschaulicht schematisch in einer Schnittdraufsicht nochmals den Strömungsweg im Austrittskanal 22. Der Kanal 22 erstreckt sich im vorliegenden Ausführungsbeispiel röhrenförmig und gekrümmt ausgehend von dem Außenbereich des den Schmiermittelfilter umgebenden hohlzylinderförmigen Teil des Leitelements 9 hin zu der Innenwand der äußeren Wandung des Behältergehäuses 1, wobei der Strömungsaustritt des Kanals 22 in einer Richtung annähernd tangential zur Innenwand des Behältergehäuses 1 verläuft, so dass das den Kanal 22 durchströmende Öl möglichst tangential auf die Innenwand des Gehäuseunterteils 1 trifft. Der Ölstrom wird beim Austreten aus dem Kanal 22 in eine Rotationsbewegung und eine spiralförmige Bewegung entlang der Innenwand der äußeren Wandung des Gehäuseunterteils 2 versetzt und strömt auf diese Weise in Richtung des Bodenbereichs des Gehäuseunterteils 2 zum Schmiermittelaustrittsstutzen 6. In Figur 3 ist gut zu erkennen, dass der Kanal 22 mit dem Leitelement 9 derart fluidisch gekoppelt ist, dass das Öl, das am oberen Endbereich des Leitelements 9 ankommt, in Richtung des Kanals 22 geleitet wird und in den Eintrittsbereich des Kanals 22 strömt.

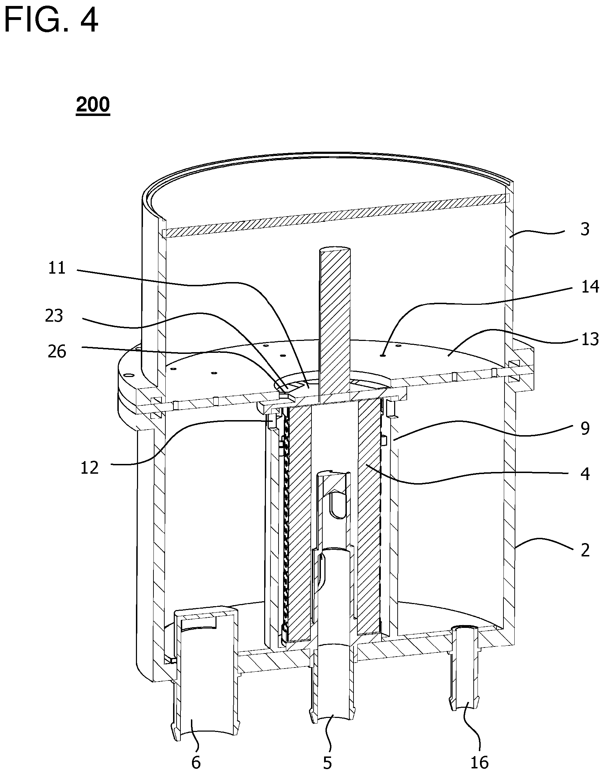

Die Figur 4 zeigt eine zweite Ausführungsform des erfindungsgemäßen Schmiermittelbehälters 200. Bei der vorliegenden Ausführungsform wird in Bezug auf die Ausgestaltung des Gehäuseunterteils 2, des Gehäuseoberteils 3, des Schmiermitteleinlassstutzens 5, des Schmiermittelauslassstutzens 6, des Leckageanschlusses 16 und die geneigte Ausgestaltung des Behältergehäusebodens auf die Ausgestaltungen in der ersten Ausführungsform verwiesen.

Bei der vorliegenden erfindungsgemäßen Ausführungsform weist das Leitelement 9 einen Hohlzylinder auf, der um eine Mantelfläche des zylinderförmigen Schmiermittelfilters 4 herum angeordnet ist und an seinem der Schwallplatte 13 zugewandten Endbereich eine Mehrzahl von Austrittsöffnungen 12 aufweist, die einen Ölstrom aus dem Hohlzylinder heraus ermöglichen. Die Austrittsöffnungen 12 haben vorliegend einen rechteckförmigen Querschnitt, was jedoch nur beispielhaft ist.

Das Leitelement 9 weist einen Leitelementdeckel 11 auf, der einen der Schwallplatte 13 zugewandten Endbereich des Schmiermittelfilters 4 überdeckt und unter Ausbildung einer Mehrzahl von Gasaustrittsspalten 23 zur Schwallplatte 13 angeordnet ist. Die Gasaustrittsspalten 23 sind durch teilweise radiale Überlappung des Leitelementdeckels 11 und der Schwallplatte 13 gebildet, wobei die Schwallplatte 13 auf an dem Leitelementdeckel 11 angeordneten Abstützrippen 26 aufliegt, so dass im Überlappungsbereich eine Gasaustrittsspalte 23 zum Abführen des aus dem Schmiermittel separierten Gases vorgesehen ist. Durch die Anordnung des Leitelementdeckels 11 mit den Abstützrippen 26 und der Schwallplatte 13 bilden sich Stufensprünge aus, die als Gasaustrittsspalte 11 dienen.

Bei der vorliegenden Ausführungsform ist die Mehrzahl von Austrittsöffnungen 12 durch die Mantelfläche des Leitelements 9 an dem oberen Endbereich des Leitelements 9 nebeneinander und auf einer Höhe angebracht, so wie es beispielsweise in der Figur 4 veranschaulicht ist.

Nach dem Passieren des Schmiermittelfilters wird das Öl entlang der Innenwand des Leitelements 9 hin zu einem oberen Endbereich des Leitelements 9 gezwungen, da der Zwischenraum zwischen Schmiermittelfilter 4 und der Innenwand des Leitelements 9 an einem unteren Randbereich geschlossen ist. Da das hohlzylindrische Leitelement 9 oben mit dem Leitelementdeckel 11 bedeckt ist, kann das Fluid ausschließlich durch die in einem oberen Randbereich des Leitelements 9 vorgesehenen Austrittsöffnungen 12 den hohlzylindrischen Raum verlassen. Das Fluid wird folglich gezwungen, durch die Mehrzahl der Austrittsöffnungen 12 in den Bereich zwischen dem hohlzylindrischen Leitelement 9 und der Innenwand der äußeren Wandung des Gehäuseunterteils 2 zu strömen. Die Fluidströme erfolgen insbesondere in einer radialen Richtung hin zu der äußeren Wandung des Gehäuseunterteils 2.

Durch den verhältnismäßig kleinen Querschnitt jeder einzelnen Austrittsöffnung 12 im Vergleich zu dem Strömungsquerschnitt im Bereich zwischen dem Schmiermittelfilter 4 und der Innenwand des Leitelements 9 wird die Strömungsgeschwindigkeit des Öls beim Passieren der Austrittsöffnungen 12 erhöht. Diese Erhöhung der Strömungsgeschwindigkeit des Öls hat den Effekt, dass in dem Raum zwischen dem Leitelement 9 und der Innenwand des Gehäuseunterteils 2 das Öl von jeder Austrittsöffnung 12 in Richtung der Innenwand des Gehäuseunterteils 2 und in Richtung des Bodenbereichs des Behälterunterteils 2 abgeleitet wird. Durch den verhältnismäßig großen Zwischenraum zwischen Leitelement 9 und Innenwand des Behälterunterteils 2 verringert sich in diesem Bereich die Strömungsgeschwindigkeit des Öls. Das in Richtung des Bodenbereichs des Behälterunterteils 2 strömende Öl verweilt für eine längere Zeit in diesem Zwischenraum und wird vor dem Bodenbereich des Gehäuseunterteils 2 hin zu dem hohlzylindrischen Leitelement 9 umgeleitet, von wo aus es sodann entlang der Außenseite des hohlzylindrischen Leitelements 9 hin zu einem oberen Endbereich des hohlzylindrischen Leitelements 9 fließt. Der Fluidstrom verläuft in dem Zwischenbereich zwischen hohlzylindrischem Leitelement 9 und der Innenwand des Gehäuseunterteils 2 somit in einer Drallbewegung bzw. Wirbelbewegung d. h., dass sich das Öl in etwa um eine virtuelle horizontale Achse bewegt. Das Öl wird daher wieder zurück zu dem oberen Bereich des Behälterunterteils 2 geleitet, wo vorhandene Gasblasen bei niedriger Strömungsgeschwindigkeit aufsteigen können.

Die aufsteigenden Gasblasen können durch die Mehrzahl von Gasaustrittsspalten 23 zwischen Schmiermittelfilterdeckel 11 und Schwallplatte 13 entweichen. Ferner sind in der Schwallplatte 13, die an einer Außenseite mit dem Gehäuseunterteil 2 und dem Gehäuseoberteil 3 verbunden ist, eine Mehrzahl von Gasdurchgangsöffnungen 14 vorhanden, durch die ebenso Gas durch die Schwallplatte 13 entweichen kann. Die Schwallplatte ist hier als planes Bauteil gezeigt. Gemäß einer nicht gezeigten Variante ist die Schwallplatte jedoch flach kegelstumpfförmig ausgeführt, wobei die Mantelfläche von außen zur Mitte leicht ansteigt. Dadurch wandern durch die Gasabscheidung freigewordene Gasblasen von einem Außenbereich der Unterseite der Schwallplatte 13 hin zu den Gasaustrittsspalten 23. Das vom Schmiermittel separierte Gas sammelt sich im Inneren des Behälteroberteils 3 an.

Ferner ist beispielsweise möglich, dass die Mehrzahl von Austrittsöffnungen 12 auf unterschiedlichen Höhen im oberen Endbereich auf der Mantelfläche des Leitelements 9 angeordnet sind und beispielsweise eine nicht reckeckförmige Querschnittsform aufweisen.

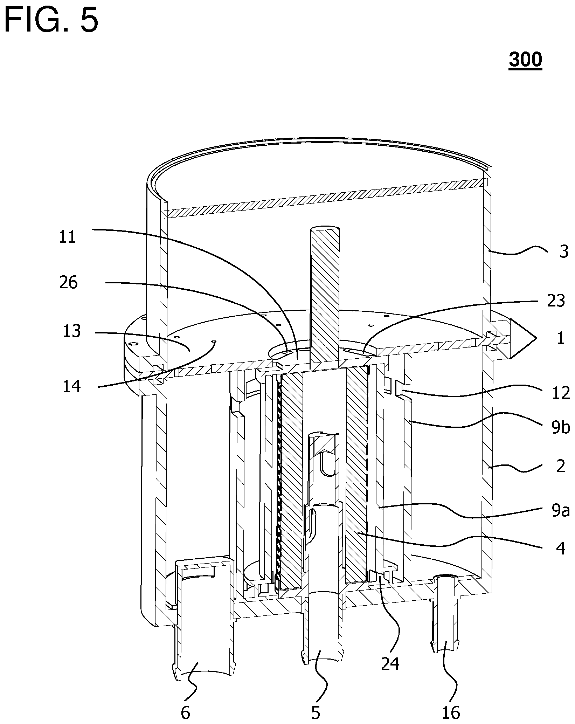

Die Figur 5 zeigt eine dritte Ausführungsform des erfindungsgemäßen Schmiermittelbehälters 300. Bei der vorliegenden Ausführungsform wird in Bezug auf die Ausgestaltung des Gehäuseunterteils 2, des Gehäuseoberteils 3, des Schmiermitteleinlassstutzens 5, des Schmiermittelauslassstutzens 6, des Leckageanschlusses 16, der kegelstumpfförmigen Schwallplatte 13 mit einer Mehrzahl von Gasdurchgangsöffnungen 14 und zentralen Gasdurchgangsöffnungen 15, der am Leitelementdeckel 11 angebrachten Abstützrippen 26, sowie der Gasaustrittsspalte 23 zwischen der Schwallplatte 13 und dem Leitelementdeckel 11 auf die Ausgestaltung in der zweiten erfindungsgemäßen Ausführungsform verwiesen.

Die vorliegende dritte Ausführungsform unterscheidet sich von der in Bezug auf die Figur 4 beschriebenen zweiten Ausführungsform dadurch, dass das Leitelement 9 einen inneren Hohlzylinder 9a und einen äußeren Hohlzylinder 9b umfasst, die konzentrisch zueinander ausgebildet sind. Ferner umfasst die vorliegende dritte Ausführungsform einen Leitelementdeckel 11, der den inneren Hohlzylinder 9a an einem oberen Endbereich bedeckt. Der innere Hohlzylinder 9a bildet einen ersten Zwischenraum zwischen dem Schmiermittelfilter 4 und dem inneren Hohlzylinder 9a aus. Der äußere Hohlzylinder 9b bildet einen zweiten Zwischenraum zwischen dem inneren und dem äußeren Hohlzylinder 9a und 9b aus. Eine Mehrzahl von Austrittsöffnungen 12 ist in dem oberen Endbereich des äußeren Hohlzylinders 9b angeordnet. Lediglich in dem unteren Endbereich des inneren Hohlzylinders 9a sind eine Mehrzahl von Durchtrittsöffnungen 24 vorgesehen, über die der erste Zwischenraum mit dem zweiten Zwischenraum fluidisch gekoppelt ist. Das Leitelement 9 bewirkt daher in der vorliegenden Ausführungsform, dass aus dem Schmiermittelfilter 4 austretendes Schmiermittel eine Strömungsbewegung entlang des inneren Hohlzylinders 9a hin zu dessen unteren Endbereich und durch die Mehrzahl von Durchtrittsöffnungen 24 und anschließend entlang des äußeren Hohlzylinders 9b hin zu dem oberen Endbereich des äußeren Hohlzylinders 9b und durch die Mehrzahl von Austrittsöffnungen 12 durchführt.

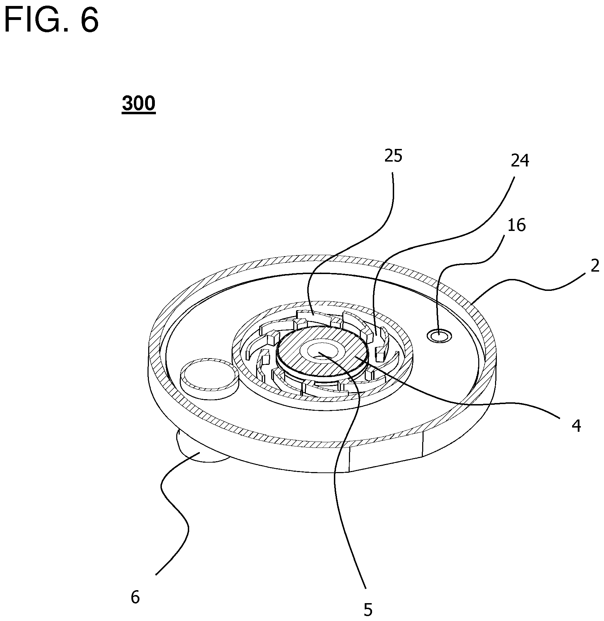

Das den Schmiermittelfilter 4 passierende Fluid wird im ersten Zwischenraum aufgrund des an dem oberen Endbereich angebrachten Leitelementsdeckels 11 in eine Abwärtsbewegung entlang des inneren Hohlzylinders 9a gezwungen. Das Fluid kann aufgrund des Leitelementdeckels 11 nicht oben zwischen dem Schmiermittelfilter 4 und dem inneren Hohlzylinder 9a entweichen, sodass es weiter zu den Durchtrittsöffnungen 24 geleitet wird. In der in den Figuren 5 und 6 veranschaulichten Ausführungsform ist in jeder Durchtrittsöffnung 24 eine Ablenkeinrichtung 25 vorgesehen.

Die Ablenkeinrichtung 25 ist vorliegend durch mehrere Ablenkrippen bzw. Drallschaufeln 25 gebildet, die im Bereich der jeweiligen Durchtrittsöffnung 24 angeordnet sind, so wie es beispielhaft in der Schnittansicht der Figur 6 veranschaulicht ist. Die Mehrzahl der Ablenkrippen ist in etwa in einer schaufelradförmigen Anordnung positioniert. Die radial angeordneten Ablenkrippen 25 versetzen den Ölstrom in eine Drallbewegung. Der fluidische Querschnitt der Ablenkrippen 25 ist eingeschnürt, so dass das Öl beschleunigt wird. Das Öl wird daher in einer rotatorischen Bewegung in den zweiten Zwischenraum geleitet, wodurch eine aufwärtsgerichtete, spiralförmige Strömungsbahn des Öls erzeugt wird. Durch den Drall bedingt steigt das Öl im zweiten Zwischenraum spiralförmig auf. Der fluidische Querschnitt ist in der zweiten Kammer erheblich größer als der fluidische Querschnitt in den Durchtrittsöffnungen 24, so dass sich eine Entspannung des Öls einstellt. Bei diesem Prozess findet bereits im doppelwandig ausgeführten Leitelement 9a, 9b eine zumindest teilweise Phasentrennung von Gas und Öl statt, bei der sich das in dem Öl vorhandene Gas von dem Öl trennt und nach oben durch die Mehrzahl von Gasaustrittsspalten 23 und/oder durch die Mehrzahl von in der Schwallplatte 13 angeordneten Gasdurchgangsöffnungen 14 entweicht. Das Öl entweicht jedoch radial über die in einem oberen Bereich des Leitelements 9b angeordneten Austrittsöffnungen 12. Die Ölströmung bildet wie bereits in Bezug zu der zweiten Ausführungsform beschrieben nach dem Ausströmen aus den Austrittsöffnungen 12 einen nach unten in Richtung des Behälterbodens gerichteten Strömungswirbel bzw. Strömungsdrall, der ein nochmaliges Abscheiden von Gas aus dem Öl begünstigt.

Der durch Phasentrennung entstandene gashaltige Fluidstrom kann über die Gasaustrittsspalte 23 und/oder über die Gasdurchgangsöffnungen 14 in der Schwallplatte 13 an der Oberseite der zweiten Zwischenkammer in das Behälteroberteil 2 geleitet werden, während das gereinigte Öl über die Austrittsöffnungen 12 an dem äußeren Hohlzylinder 9b entweicht. Im anschließenden Ruhebereich können gegebenenfalls verbleibende Gasblasen austreten.

### Bezugszeichenliste

- 1: Behältergehäuse
- 2: Gehäuseunterteil
- 3: Gehäuseoberteil
- 4: Schmiermittelfilter
- 5: Schmiermitteleintrittsstutzen
- 6: Schmiermittelaustrittsstutzen
- 7: Behältergehäusedeckel
- 8: Schmiermitteleinfüllstutzen
- 9: Leitelement
- 9a: Innerer Hohlzylinder
- 9b: Äußerer Hohlzylinder
- 10: Schmiermittelfilterdeckel
- 11: Leitelementdeckel
- 12: Austrittsöffnung
- 13: Schwallplatte
- 14: Gasdurchgangsöffnung
- 15: Zentrale Gasdurchgangsöffnung
- 16: Leckageanschluss
- 17: Auslassöffnung
- 18: Griff
- 19: Feder
- 20: Oberteil
- 20a: Halbkanalabschnitt
- 20b: Abdeckelement
- 21: Unterteil
- 21a: Halbkanalabschnitt
- 21b: Ringförmiger Innenabschnitt
- 22: Kanal
- 23: Gasaustrittsspalt
- 24: Durchtrittsöffnung
- 25: Ablenkeinrichtung
- 26: Abstützrippe

## Patentansprüche

1. Schmiermittelbehälter (100; 200; 300) für ein Hydrauliksystem, umfassend
ein Behältergehäuse (1), mit einem Gehäuseunterteil (2) und einem mit dem Gehäuseunterteil (2) verbundenen Gehäuseoberteil (3);
einen im Behältergehäuse (1) angeordneten Schmiermittelfilter (4);
mindestens einen Schmiermitteleintrittsstutzen (5) und mindestens einen Schmiermittelaustrittsstutzen (6) zum Anschließen des Schmiermittelbehälters (100; 200; 300) an mindestens einen Kreislauf eines Hydrauliksystems, die jeweils an einem Bodenbereich des Gehäuseunterteils (2) angeordnet sind;
ein im Behältergehäuse (1) angeordnetes Leitelement, welches eine Leitbahn für das Schmiermittel ausbildet, durch die Schmiermittel, nach dem Passieren des Schmiermittelfilters (4) und vor dem Verlassen des Behältergehäuses (1) über den Schmiermittelaustrittsstutzen (6) zur Abscheidung von in ihm enthaltenem Gas in eine Strömungsbewegung gezwungen wird;
**dadurch gekennzeichnet, dass**
das Leitelement (9; 22; 9a, 9b) sich von dem Bodenbereich des Gehäuseunterteils (2) bis zu einem oberen Endbereich des Gehäuseunterteils (2) erstreckt, im oberen Endbereich mindestens eine Austrittsöffnung (22; 12) aufweist und so ausgestaltet ist, dass es aus dem Schmiermittelfilter (4) austretendes Schmiermittel eine Strömungsbewegung entlang des Leitelements (9, 22; 9a, 9b) hin zu dem oberen Endbereich des Gehäuseunterteils (2) und durch die mindestens eine Austrittsöffnung (12; 22) aufzwingt.

2. Schmiermittelbehälter (100; 200; 300) nach Anspruch 1, **dadurch gekennzeichnet, dass** zwischen Gehäuseunterteil (2) und Gehäuseoberteil (3) eine Schwallplatte (13) angeordnet ist, die Gasdurchgangsöffnungen (14, 15) aufweist.

3. Schmiermittelbehälter (100) nach Anspruch 1 oder 2, **dadurch gekennzeichnet, dass** die mindestens eine Austrittsöffnung durch einen Austrittskanal (22) gebildet ist, der gekrümmt und vorzugsweise röhrenförmig ausgeführt ist, derart,
a) dass ein Fluidstrom beim Austreten aus dem Austrittskanal (22) in eine Rotationsbewegung und/oder eine spiralförmige Bewegung entlang einer Innenwand des Gehäuseunterteils (2) und der Schwallplatte (13) versetzt wird; und/oder
b) dass ein Fluidstrom annähernd tangential zur Innenwand des Gehäuseunterteils (2) aus dem Austrittskanal (22) austritt; und/oder
c) dass sich der Austrittskanal (22) in einem Winkelbereich von 30° bis 120°, vorzugsweise in einem Winkelbereich von 45° bis 100° erstreckt.

4. Schmiermittelbehälter (100) nach Anspruch 3, **dadurch gekennzeichnet,**
a) **dass** die Schwallplatte (13) den Austrittskanal (22) ausbildet; und/oder
b) **dass** die Schwallplatte (13) zweiteilig ausgeführt ist, aufweisend ein Oberteil (20) und ein Unterteil (21), wobei das Unterteil (21) einen unteren Kanalabschnitt ausbildet und das Oberteil (20) einen oberen Kanalabschnitt des Austrittskanals (22) sowie ein als Schwallschutz dienendes Abdeckelement ausbildet.

5. Schmiermittelbehälter (200) nach einem der vorherigen Ansprüche, **dadurch gekennzeichnet, dass** das Leitelement (9) einen Hohlzylinder aufweist, der um eine Mantelfläche eines zylinderförmigen Schmiermittelfilters (4) herum angeordnet ist und an seinem der Schwallplatte (13) zugewandten Endbereich die mindestens eine Austrittsöffnung (12) aufweist, die einen Fluidstrom aus dem Hohlzylinder heraus ermöglicht, insbesondere in radialer Richtung.

6. Schmiermittelbehälter (300) nach einem der Ansprüche 1, 2 und 5, **dadurch gekennzeichnet, dass** das Leitelement (9) einen inneren Hohlzylinder (9a) und einen äußeren Hohlzylinder (9b) umfasst, die konzentrisch zueinander ausgebildet sind, wobei der innere Hohlzylinder (9a) einen ersten Zwischenraum zwischen Schmiermittelfilter (4) und dem inneren Hohlzylinder (9a) ausbildet und wobei der äußere Hohlzylinder (9b) einen zweiten Zwischenraum zwischen innerem und äußerem Hohlzylinder (9a, 9b) ausbildet, wobei die mindestens eine Austrittsöffnung (12) im oberen Endbereich des äußeren Hohlzylinders (9b) angeordnet ist und wobei lediglich im unteren Endbereich des inneren Hohlzylinders (9a) mindestens eine Durchtrittsöffnung (24) vorgesehen ist, über die der ersten Zwischenraum mit den zweiten Zwischenraum fluidisch gekoppelt ist.

7. Schmiermittelbehälter (300) nach Anspruch 6, **dadurch gekennzeichnet, dass** die mindestens eine Durchtrittsöffnung (24) eine Ablenkeinrichtung (25) aufweist, mittels derer ein aus dem ersten in den zweiten Zwischenraum übertretender Fluidstrom in eine Rotationsbewegung versetzt wird.

8. Schmiermittelbehälter (300) nach Anspruch 7, **dadurch gekennzeichnet, dass** die Ablenkeinrichtung (25) durch mehrere Ablenkrippen und/oder Drallschaufeln gebildet sind, die vorzugsweise schaufelradförmig im Bereich der mindestens einen Durchtrittsöffnung (24) angeordnet sind.

9. Schmiermittelbehälter (300) nach einem der Ansprüche 6 bis 8, **dadurch gekennzeichnet, dass** die mindestens eine Durchtrittsöffnung (24) und/oder die Ablenkeinrichtung (25) eine Höhe von kleiner 20 mm, vorzugsweise kleiner 15 mm aufweist.

10. Schmiermittelbehälter (200; 300) nach Anspruch 2 oder 5 bis 9, **dadurch gekennzeichnet, dass** die Schwallplatte (13) haubenförmig, vorzugsweise kegelförmig oder kegelstumpfförmig ausgestaltet ist.

11. Schmiermittelbehälter (200; 300) nach Anspruch 10, **dadurch gekennzeichnet, dass** die Gasdurchgangsöffnungen (14, 15) der Schwallplatte (13) unterschiedliche Größen aufweisen, wobei die über oder angrenzend an den Schmiermittelfilter (4) angeordneten Gasdurchgangsöffnungen (15) am größten ausgeführt sind.

12. Schmiermittelbehälter (200; 300) nach einem der Ansprüche 2 bis 11, **dadurch gekennzeichnet, dass** das Leitelement (9; 9a) einen Leitelementdeckel (11) aufweist, der einen der Schwallplatte (13) zugewandten Endbereich des Schmiermittelfilters (4) überdeckt und unter Ausbildung mindestens eines Gasaustrittsspalts (23) zur Schwallplatte (13) angeordnet ist.

13. Schmiermittelbehälter (200; 300) nach Anspruch 12, **dadurch gekennzeichnet, dass** der mindestens eine Gasautrittsspalt (23) durch eine zumindest teilweise radiale Überlappung des Leitelementdeckels (11) und der Schwallplatte (13) gebildet ist, wobei die Schwallplatte (13) auf mindestens einer an dem Leitelementdeckel (11) angeordneten Abstützrippe (26) derart aufliegt, so dass im Überlappungsbereich mindestens ein Gasaustrittsspalt (23) zum Abführen des aus dem Schmiermittel separierten Gases vorgesehen ist.

14. Schmiermittelbehälter (100; 200; 300) nach einem der vorhergehenden Ansprüche, **dadurch gekennzeichnet, dass** der Bodenbereich des Gehäuseunterteils (2) einen Leckageanschluss (16) zur Aufnahme von Leckschmiermittel aufweist, wobei der Bodenbereich geneigt ausgeführt ist und der Leckageanschluss (16) an der tiefsten Stelle des Bodenbereichs des Gehäuseunterteils (2) angeordnet ist.

15. Schmiermittelbehälter nach einem der vorhergehenden Ansprüche, **dadurch gekennzeichnet, dass** der Schmiermittelfilter (4) an einem dem Gehäuseoberteil (3) zugewandten Endbereich über eine Feder (19) mit einem Griff (18) zum Einsetzen und Herausnehmen des Schmiermittelfilters (8), der am Gehäuseoberteil abgestützt ist, gekoppelt ist, wobei über die Feder (19) ein Filtersicherungsventil ausgebildet wird, derart, dass bei Überschreiten eines vorbestimmten Druckschwellenwerts im Innen des Schmiermittelfilters (4) der Schmiermittelfilter (4) gegen die Feder (19) angehoben wird und eine Kontaktstelle zum Gehäuseunterteil (2) für einen Fluidstrom freigegeben wird und so einen Bypasskanal ausbildet.

16. Schmiermittelbehälter nach Anspruch 15, **dadurch gekennzeichnet, dass** die Feder (19) ungeführt ist.

17. Kraftfahrzeug, insbesondere Nutzfahrzeug, mit einem Schmiermittelbehälter (1) nach einem der vorhergehenden Ansprüche.

## Claims

1. Lubricant container (100; 200; 300) for a hydraulic system, comprising
a container housing (1), having a lower housing part (2) and an upper housing part (3) connected to the lower housing part (2);
a lubricant filter (4) arranged in the container housing (1);
at least one lubricant inlet connecting piece (5) and at least one lubricant outlet connecting piece (6) for connecting the lubricant container (100; 200; 300) to at least one circuit of a hydraulic system, which are each arranged in a bottom region of the lower housing part (2);
a conducting element arranged in the container housing (1), said conducting element forming a pathway for the lubricant, said pathway forcing lubricant into a flow movement after it has passed through the lubricant filter (4) and before it has left the container housing (1) via the lubricant outlet connecting piece (6) in order to deposit the gas contained in it;
**characterized in that**
the conducting element (9; 22; 9a, 9b) extends from the bottom region of the lower housing part (2) to an upper end region of the lower housing part (2), has at least one outlet opening (22; 12) in the upper end region, and is configured such that it forces lubricant emerging from the lubricant filter (4) into a flow movement along the conducting element (9, 22; 9a, 9b) as far as the upper end region of the lower housing part (2) and through the at least one outlet opening (12; 22) .

2. Lubricant container (100; 200; 300) according to Claim 1, **characterized in that** a baffle plate (13), which has gas passage openings (14, 15), is arranged between the lower housing part (2) and upper housing part (3).

3. Lubricant container (100) according to Claim 1 or 2, **characterized in that** the at least one outlet opening is formed by an outlet duct (22) which is embodied in a curved and preferably tubular manner, such
a) that a fluid flow, upon emerging from the outlet duct (22), is set into a rotational movement and/or a spiral movement along an inner wall of the lower housing part (2) and the baffle plate (13); and/or
b) that a fluid flow emerges from the outlet duct (22) approximately tangentially to the inner wall of the lower housing part (2); and/or
c) that the outlet duct (22) extends in an angular range of 30° to 120°, preferably in an angular range of 45° to 100°.

4. Lubricant container (100) according to Claim 3, **characterized**
a) **in that** the baffle plate (13) forms the outlet duct (22); and/or
b) **in that** the baffle plate (13) is embodied in two parts, having an upper part (20) and a lower part (21), wherein the lower part (21) forms a lower duct portion and the upper part (20) forms an upper duct portion of the outlet duct (22) and a cover element that serves as a surge baffle.

5. Lubricant container (200) according to one of the preceding claims, **characterized in that** the conducting element (9) has a hollow cylinder which is arranged around a lateral surface of a cylindrical lubricant filter (4) and has, in its end region facing the baffle plate (13), the at least one outlet opening (12), which allows a fluid flow out of the hollow cylinder, in particular in the radial direction.

6. Lubricant container (300) according to one of Claims 1, 2 and 5, **characterized in that** the conducting element (9) comprises an inner hollow cylinder (9a) and an outer hollow cylinder (9b), which are formed concentrically with one another, wherein the inner hollow cylinder (9a) forms a first intermediate space between the lubricant filter (4) and the inner hollow cylinder (9a) and wherein the outer hollow cylinder (9b) forms a second intermediate space between the inner and outer hollow cylinders (9a, 9b), wherein the at least one outlet opening (12) is arranged in the upper end region of the outer hollow cylinder (9b) and wherein at least one through-opening (24), via which the first intermediate space is fluidically coupled to the second intermediate space, is provided only in the lower end region of the inner hollow cylinder (9a).

7. Lubricant container (300) according to Claim 6, **characterized in that** the at least one through-opening (24) has a deflecting device (25), by means of which a fluid flow passing from the first intermediate space into the second is set into a rotational movement.

8. Lubricant container (300) according to Claim 7, **characterized in that** the deflecting device (25) is formed by several deflecting ribs and/or swirl blades, which are arranged, preferably in the form of a blade wheel, in the region of the at least one through-opening (24).

9. Lubricant container (300) according to one of Claims 6 to 8, **characterized in that** the at least one through-opening (24) and/or the deflecting device (25) has a height of less than 20 mm, preferably less than 15 mm.

10. Lubricant container (200; 300) according to Claim 2 or 5 to 9, **characterized in that** the baffle plate (13) is configured in a hood-like, preferably conical or frustoconical manner.

11. Lubricant container (200; 300) according to Claim 10, **characterized in that** the gas passage openings (14, 15) in the baffle plate (13) are different sizes, wherein the gas passage openings (15) arranged over or next to the lubricant filter (4) are embodied in the largest manner.

12. Lubricant container (200; 300) according to one of Claims 2 to 11, **characterized in that** the conducting element (9; 9a) has a conducting element cover (11) which covers an end region, facing the baffle plate (13), of the lubricant filter (4) and is arranged in a manner forming at least one gas outlet gap (23) with respect to the baffle plate (13).

13. Lubricant container (200; 300) according to Claim 12, **characterized in that** the at least one gas outlet gap (23) is formed by an at least partially radial overlap of the conducting element cover (11) and the baffle plate (13), wherein the baffle plate (13) rests on at least one supporting rib (26) arranged on the conducting element cover (11), such that at least one gas outlet gap (23) for discharging the gas separated out of the lubricant is provided in the overlap region.

14. Lubricant container (100; 200; 300) according to one of the preceding claims, **characterized in that** the bottom region of the lower housing part (2) has a leakage port (16) for receiving leakage lubricant, wherein the bottom region is embodied in an inclined manner and the leakage port (16) is arranged at the lowest point of the bottom region of the lower housing part (2).

15. Lubricant container according to one of the preceding claims, **characterized in that**, in an end region facing the upper housing part (3), the lubricant filter (4) is coupled, via a spring (19), to a handle (18) for inserting and extracting the lubricant filter (8), which is supported on the upper housing part, wherein a filter safety valve is formed via the spring (19), such that when a predetermined pressure threshold inside the lubricant filter (4) is exceeded, the lubricant filter (4) is lifted counter to the spring (19) and a contact point with respect to the lower housing part (2) is opened up for a fluid flow and thus a bypass duct is formed.

16. Lubricant container according to Claim 15, **characterized in that** the spring (19) is unguided.

17. Motor vehicle, in particular a commercial vehicle, having a lubricant container (1) according to one of the preceding claims.

## Revendications

1. Réservoir de lubrifiant (100 ; 200 ; 300) pour un système hydraulique, comportant
un corps de réservoir (1), doté d'une partie inférieure de corps (2) et d'une partie supérieure de corps (3) reliée à la partie inférieure de corps (2) ;
un filtre à lubrifiant (4) disposé dans le corps de réservoir (1) ;
au moins une tubulure d'entrée de lubrifiant (5) et au moins une tubulure de sortie de lubrifiant (6) pour le raccordement du réservoir de lubrifiant (100 ; 200 ; 300) à au moins un circuit d'un système hydraulique, lesquelles sont disposées respectivement au niveau d'une région de fond de la partie inférieure de corps (2) ; un élément de guidage disposé dans le corps de réservoir (1), lequel élément de guidage forme une voie de guidage pour le lubrifiant, par le biais de laquelle le lubrifiant, après avoir traversé le filtre à lubrifiant (4) et avant de sortir du corps de réservoir (1), est forcé d'effectuer un mouvement d'écoulement via la tubulure de sortie de lubrifiant (6) pour la séparation du gaz contenu dans celui-ci ;
**caractérisé en ce que**
l'élément de guidage (9 ; 22 ; 9a, 9b) s'étend à partir de la région de fond de la partie inférieure de corps (2) jusqu'à une région d'extrémité supérieure de la partie inférieure de corps (2), comprend au moins une ouverture de sortie (22 ; 12) dans la région d'extrémité supérieure et est configuré de telle sorte qu'il impose au lubrifiant sortant du filtre à lubrifiant (4) un mouvement d'écoulement le long de l'élément de guidage (9, 22 ; 9a, 9b) en direction de la région d'extrémité supérieure de la partie inférieure de corps (2) et à travers l'au moins une ouverture de sortie (12 ; 22).

2. Réservoir de lubrifiant (100 ; 200 ; 300) selon la revendication 1, **caractérisé en ce qu'**une plaque brise-flots (13) est disposée entre la partie inférieure de corps (2) et la partie supérieure de corps (3), laquelle plaque comprend des ouvertures de passage de gaz (14, 15) .

3. Réservoir de lubrifiant (100) selon la revendication 1 ou 2, **caractérisé en ce que** l'au moins une ouverture de sortie est formée par un canal de sortie (22) qui est réalisé de manière courbée et de préférence de manière tubulaire, de telle sorte
a) qu'un flux de fluide est mis en mouvement de rotation et/ou en mouvement en spirale le long d'une paroi intérieure de la partie inférieure de corps (2) et de la plaque brise-flots (13) lors de la sortie du canal de sortie (22) ; et/ou
b) qu'un flux de fluide sort du canal de sortie (22) approximativement tangentiellement à la paroi intérieure de la partie inférieure de corps (2) ; et/ou
c) que le canal de sortie (22) s'étend dans une plage angulaire de 30° à 120°, de préférence dans une plage angulaire de 45° à 100°.

4. Réservoir de lubrifiant (100) selon la revendication 3, **caractérisé en ce que**
a) la plaque brise-flots (13) forme le canal de sortie (22) ; et/ou
b) **en ce que** la plaque brise-flots (13) est réalisée en deux parties, comprenant une partie supérieure (20) et une partie inférieure (21), la partie inférieure (21) formant une section de canal inférieure et la partie supérieure (20) formant une section de canal supérieure du canal de sortie (22) ainsi qu'un élément de recouvrement servant de protection brise-flots.

5. Réservoir de lubrifiant (200) selon l'une des revendications précédentes, **caractérisé en ce que** l'élément de guidage (9) comprend un cylindre creux qui est disposé autour d'une surface d'enveloppe d'un filtre à lubrifiant (4) cylindrique et comprend, au niveau de sa région d'extrémité tournée vers la plaque brise-flots (13), l'au moins une ouverture de sortie (12) qui permet un flux de fluide hors du cylindre creux, en particulier dans la direction radiale.

6. Réservoir de lubrifiant (300) selon l'une des revendications 1, 2 et 5, **caractérisé en ce que** l'élément de guidage (9) comporte un cylindre creux intérieur (9a) et un cylindre creux extérieur (9b) qui sont formés concentriquement l'un par rapport à l'autre, le cylindre creux intérieur (9a) formant un premier espace intermédiaire entre le filtre à lubrifiant (4) et le cylindre creux intérieur (9a) et le cylindre creux extérieur (9b) formant un deuxième espace intermédiaire entre le cylindre creux intérieur et le cylindre creux extérieur (9a, 9b), l'au moins une ouverture de sortie (12) étant disposée dans la région d'extrémité supérieure du cylindre creux extérieur (9b) et au moins une ouverture de passage (24) étant prévue seulement dans la région d'extrémité inférieure du cylindre creux intérieur (9a), ouverture de passage par le biais de laquelle le premier espace intermédiaire est accouplé fluidiquement au deuxième espace intermédiaire.

7. Réservoir de lubrifiant (300) selon la revendication 6, **caractérisé en ce que** l'au moins une ouverture de passage (24) comprend un dispositif de déviation (25) au moyen duquel un flux de fluide débordant du premier dans le deuxième espace intermédiaire est mis en mouvement de rotation.

8. Réservoir de lubrifiant (300) selon la revendication 7, **caractérisé en ce que** le dispositif de déviation (25) est formé par plusieurs nervures de déviation et/ou ailettes de tourbillonnement, qui sont disposées de préférence en forme de roue à ailettes dans la région de l'au moins une ouverture de passage (24).

9. Réservoir de lubrifiant (300) selon l'une des revendications 6 à 8, **caractérisé en ce que** l'au moins une ouverture de passage (24) et/ou le dispositif de déviation (25) présent(ent) une hauteur inférieure à 20 mm, de préférence inférieure à 15 mm.

10. Réservoir de lubrifiant (200 ; 300) selon les revendications 2 ou 5 à 9, **caractérisé en ce que** la plaque brise-flots (13) est configurée en forme de calotte, de préférence en forme de cône ou en forme de tronc de cône.

11. Réservoir de lubrifiant (200 ; 300) selon la revendication 10, **caractérisé en ce que** les ouvertures de passage de gaz (14, 15) de la plaque brise-flots (13) présentent différentes dimensions, les ouvertures de passage de gaz (15) disposées au-dessus du filtre à lubrifiant (4) ou de manière adjacente à celui-ci étant les plus grandes.

12. Réservoir de lubrifiant (200 ; 300) selon l'une des revendications 2 à 11, **caractérisé en ce que** l'élément de guidage (9 ; 9a) comprend un couvercle d'élément de guidage (11) qui recouvre une région d'extrémité du filtre à lubrifiant (4) tournée vers la plaque brise-flots (13) et est disposé par rapport à la plaque brise-flots (13) en formant au moins un interstice de sortie de gaz (23).

13. Réservoir de lubrifiant (200 ; 300) selon la revendication 12, **caractérisé en ce que** l'au moins un interstice de sortie de gaz (23) est formé par un chevauchement au moins partiellement radial du couvercle d'élément de guidage (11) et de la plaque brise-flots (13), la plaque brise-flots (13) reposant sur au moins une nervure de support (26) disposée sur le couvercle d'élément de guidage (11), de sorte qu'au moins un interstice de sortie de gaz (23) servant à l'évacuation du gaz séparé du lubrifiant soit prévu dans la région de chevauchement.

14. Réservoir de lubrifiant (100 ; 200 ; 300) selon l'une des revendications précédentes, **caractérisé en ce que** la région de fond de la partie inférieure de corps (2) comprend un raccord de fuite (16) servant à la réception de fuites de lubrifiant, la région de fond étant réalisée de manière inclinée et le raccord de fuite (16) étant disposé au point le plus bas de la région de fond de la partie inférieure de corps (2).

15. Réservoir de lubrifiant selon l'une des revendications précédentes, **caractérisé en ce que** le filtre à lubrifiant (4) est, au niveau d'une région d'extrémité tournée vers la partie supérieure de corps (3), accouplé par le biais d'un ressort (19) à une poignée (18) servant à l'insertion et au retrait du filtre à lubrifiant (8), laquelle poignée est supportée sur la partie supérieure de corps, une soupape de sécurité de filtre étant formée par le biais du ressort (19), de telle sorte qu'en cas de dépassement d'une valeur seuil de pression prédéfinie à l'intérieur du filtre à lubrifiant (4), le filtre à lubrifiant (4) est soulevé à l'encontre du ressort (19) et un point de contact par rapport à la partie inférieure de corps (2) est libéré pour un écoulement de fluide et forme ainsi un canal de dérivation.

16. Réservoir de lubrifiant selon la revendication 15, **caractérisé en ce que** le ressort (19) n'est pas guidé.

17. Véhicule automobile, en particulier véhicule utilitaire, comportant un réservoir de lubrifiant (1) selon l'une des revendications précédentes.
